# EUROPEAN PATENT SPECIFICATION

(11) **EP 3 287 684 B1**
(45) Date of publication and mention of the grant of the patent: **27.02.2019**
(21) Application number: 16185157.1
(22) Date of filing: 22.08.2016
(51) Int. Cl.: F16M 11/10, B60R 11/02, F16M 11/20, F16M 11/24

(54) **AN ADJUSTABLE ARM FOR HOLDING A DRIVER INTERFACE OF A LIFT-TRUCK**
VERSTELLBARER ARM ZUM HALTEN EINER FAHRERSCHNITTSTELLE EINES GABELSTAPLERS
BRAS RÉGLABLE DESTINÉ À MAINTENIR UNE INTERFACE DE PILOTE D'UN CHARIOT ÉLÉVATEUR

(43) Date of publication of application: 28.02.2018
(73) Proprietor: Toyota Material Handling Manufacturing Sweden AB, 595 81 Mjölby (SE)
(72) Inventor: OLOFSSON, Håkan, 584 22 Linköping (SE)
(74) Representative: Ström & Gulliksson AB

(56) References cited:
- EP-A2- 0 183 288
- DE-A1-102010 000 950
- US-A- 3 160 379
- US-A- 5 564 668

## Description

### Technical field

The present disclosure relates to an adjustable arm for holding a driver interface of a lift truck. The present disclosure also relates to a lift-truck comprising an adjustable arm for holding a driver interface.

### Background art

In certain types of lift-trucks, such as Very Narrow Aisle Trucks, the driver sometimes changes between a seated position and a standing position. A general problem associated therewith is that it may be difficult for the driver reach the controls of the lift-truck when standing up. Also, drivers of different length may face difficulties to use controls that are fixed in a standard position in the lift-truck. To allow easy access for the driver to the controls of the lift-truck the controls may therefore be arranged on an adjustable arm. One such adjustable arm is shown in US7731135 which has a telescopic structure and that is pivotally attached to a base by one end and that has a holding plate for driver controls pivotally attached to the other end. To lock the arm after adjustment, locking screws are provided between the base and the telescopic structure and between the holding plate and the telescopic structure. A problem with the adjustable arm of US7731135 is that, to adjust the position of the arm, the driver must untighten and retighten the multiple locking screws. This procedure is both cumbersome and time consuming for the driver.

Another adjustable arm is disclosed in US5564668 showing a support member that is pivotally mounted by one end to a base and a computer tray pivotally mounted to the other end of the support member. A locking mechanism including a tension rod extends between the ends of the support member to lock and unlock pivotal connections between the base, computer tray and the support member.

Further adjustable arms are disclosed in EP0183288 and DE10201000950.

Thus, it is an object of the present disclosure to provide an improved adjustable arm for holding a driver interface of a lift truck which solves or at least mitigates one of the problems of the prior art. In particular it is an object of the present disclosure to provide an adjustable arm for holding a driver interface of a lift truck which allows for easy adjustment of the position of the arm. Moreover it is an object of the present disclosure to provide an adjustable arm for holding a driver interface of a lift truck which may be locked and unlocked by one single manual operation.

### Summary of the invention

According to the present disclosure at least one of the aforementioned objects is met by an adjustable arm 100 according to claim 1.

By the particular construction of the adjustable arm for holding a driver interface of a lift-truck according to the present disclosure it is made possible to unlock the arm with a single movement and to adjust both the angular position of the holder for a driver interface and the angular position and the axial length of the arm. The adjustable arm according to the present disclosure therefore provides for time savings in the operation of lift trucks where the driver often changes positions or in the operation of lift trucks that are used by different drivers. Another advantage of the adjustable arm according to the present disclosures is that it is compact and comprises few externally exposed parts. According to a preferred embodiment of the adjustable arm 1 for holding a driver interface of a lift-truck,
- the base comprises teeth 1.1, wherein;
- the elongate housing 2 has a first end 2.1 pivotally attached to the base 1 such that the teeth 1.1 of said base 1 extend into said housing 2 and that;
- the arm body 4 comprises a first body portion 5 having teeth 5.1, 5.2 and that is arranged axially movable in said housing 2; and a second body portion 6 having teeth 6.1 and that is arranged axially movable in said first body portion 5, wherein;
- the holder 3 for a driver interface is pivotally attached to said first and second body portion 5, 6, and;
- the locking linkage 7 comprises a first linkage section 8 having teeth 8.1 for engaging the teeth 1.1 of the base 1 and a second linkage section 9 having teeth 9.1 for engaging the teeth 5.1, 5.2, 6.1 of said first and second body portion 5, 6, wherein, the locking linkage 7 is arranged such that in the locked position A, the teeth 8.1 of the first linkage section 8 are in engagement with the teeth 1.1 of the base 1 and the teeth 9.1 of the second linkage section 9 are in engagement with the teeth 5.1, 5.2, 6.1 of the first and the second body portion 5, 6 and in the unlocked position B, the teeth 8.1 of the first linkage section 8 are out of engagement with the teeth 1.1 of the base 1 and the teeth 9.1 of the second linkage section 9 are out of engagement with the teeth 5.1, 5.2, 6.1 of said first and second body portion 5, 6.

Further features and alternatives of the adjustable arm of the present disclosure are disclosed in the following detailed description and the dependent claims.

### Brief description of the drawings

Figure 1: A schematic perspective drawing of an adjustable arm for holding a driver interface of a lift truck according to a first embodiment of the present disclosure.
Figure 2: A schematic exploded drawing of the adjustable arm according to the first embodiment.
Figure 3a: A schematic cross-sectional side view drawing of the adjustable arm according to the first embodiment in an unlocked position B.
Figure 3b A schematic cross-sectional front view drawing of the adjustable arm according to the first embodiment in a an unlocked position B.
Figure 4a: A schematic cross-sectional side view drawing of the adjustable arm according to the first embodiment in a locked position A.
Figure 4b: A Schematic cross-sectional front view drawing of an adjustable arm according to the first embodiment in a locked position A.
Figure 5: A Schematic cross-sectional front view drawing of an adjustable arm for holding a driver interface according to a second embodiment of the present disclosure in a locked position A.

### Definitions

In the present disclosure is by "engagement means" meant means on a first and a second member which releasable couples the first and the second member to each other in a non-permanent manner. Non-limiting examples of "engagement means" in the sense of the present disclosure includes protrusions and corresponding recesses; friction surfaces, and teeth, such as intermeshing teeth.

In the present disclosure is by "teeth" meant teeth that are configured for intermeshing engagement. That is, the teeth of one member are configured to enter in between the teeth of another member and vice versa so that the two members are prevented from moving in relation to each other. Non-limiting examples where such teeth are used are toothed racks, cogwheels or gearwheels.

### Detailed description of embodiments

The adjustable arm for holding a driver interface of a lift-truck according to the present disclosure will now be described more fully hereinafter. The adjustable arm for holding a driver interface of a lift-truck according to the present disclosure may however be embodied in many different forms and should not be construed as limited to the embodiments set forth herein. Rather, these embodiments are provided by way of example so that this disclosure will be thorough and complete, and will fully convey the scope of the present disclosure to those persons skilled in the art. Same reference numbers refer to same elements throughout the description.

Hereinafter, the adjustable arm for holding a driver interface of a lift-truck will be denominated "the adjustable arm"

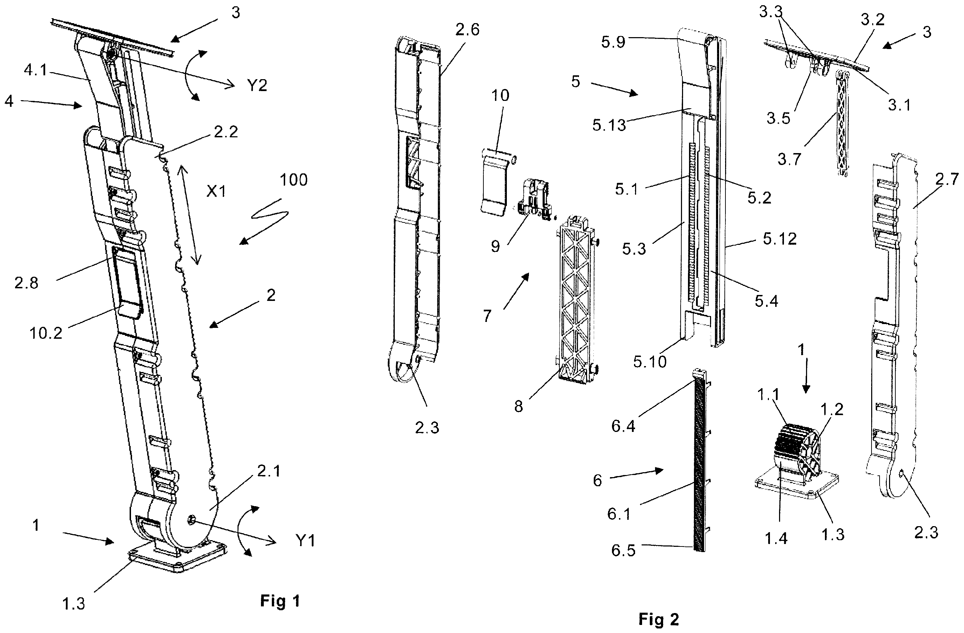

Figure 1 shows an adjustable arm 100 according to a first embodiment of the present disclosure. The adjustable arm 100 comprises a base 1 having a mounting plate 1.3 for attaching the base 1 to a floor or a wall of the driver's booth of a lift-truck (not shown). An elongate housing 2 is pivotally attached by a first end 2.1 to the base 1 such that the housing 2 may pivot around a first axis Y1. The housing 2 comprises an opening 2.8 through which extends the end 10.2 of a lever for operating a locking linkage of the adjustable arm (not shown). An arm body 4 is arranged in the housing 2 such that its first end 4.1 extends from a second end 2.2 of the housing 2. The arm body 4 is axially movable in the housing 2, i.e. movable along an axis X1 extending between the first and the second ends 2.1, 2.2 of the housing 2. A holder 3 for a driver interface (not shown) is pivotally attached to a first end 4.1 of the body 4 such that the holder 3 may pivot around a third axis Y2 which is parallel to the first axis Y1. Axes Y1 and Y2 are orthogonal to axis X1.

In operation, the angle of the adjustable arm 100 may be adjusted by pivoting the housing 2 around the base 1. The length of the adjustable arm may be adjusted by moving the body 4 axially in the housing 2 and the angle of the holder 3 for a driver interface may be adjusted by pivoting the holder 3 around the first end 4.1 of the body 4.

Figure 2 is an exploded view of the adjustable arm 100 shown in figure 1. Thus, the base 1 comprises a semi-circular structure 1.4 which protrudes from the mounting plate 1.3 and that comprises a section of teeth 1.1. The semi-circular structure 1.4 of the base 1 further comprises an opening 1.2 for receiving a shaft (not shown) for pivotal attachment of the housing 2 to the base 1. The housing 2 comprises two housing halves 2.6, 2.7 which together form the housing, which is hollow. When assembled, the first end 2.1 of the housing 2 is open so that the semi-circular structure 1.4, and the teeth 1.1, of the base 1 may be extend into the housing 2. The two housing halves comprises each a half shaft 2.3 which is formed integral with the housing halves. When the housing 2 is assembled the two half shafts 2.3 form a continuous shaft in the first end 2.1 of the housing 2 by which the housing 2 is pivotally attached to the semi-circular structure 1.4 of the base 1.

The arm body 4 comprises a first body portion 5 and a second body portion 6. The first body portion 5 is elongate, has an upper side 5.12 and a lower side 5.13 and comprises a first and a second leg 5.3, 5.4 which are spaced apart and extend parallel to each other in direction from a first end 5.9 of the body portion 5 to its second end 5.10. The first leg 5.3 comprises a first elongate section of teeth 5.1 and the second leg 5.4 comprises a second elongate section of teeth 5.2. The first and second elongate section of teeth 5.1, 5.2 extend along at least a portion of a respective leg 5.3, 5.4 in direction from the first end 5.9 of the body portion 5 to the second end 5.10 thereof. In the described embodiment, the first and the second sections of teeth 5.1, 5.2 are arranged such that they mutually face each other. The first and the second section of teeth 5.1, 5.1 are thereby inclined towards each other. However, as will be described in a second embodiment, the first and the second sections of teeth 5.1, 5.2 may have other configuration. The body portion 4 further comprises a second body portion 6 which is elongate and that is configured to be arranged movable in the first body portion 5. That is, the second body portion 6 may be placed in sliding contact with the first body portion 5. The second body portion 6 comprises an elongate section of teeth 6.1. Thus the second section of teeth 6.1 extends along at least a portion of the second body portion 6 in direction from its first end 6. 4 to its second end 6.5.

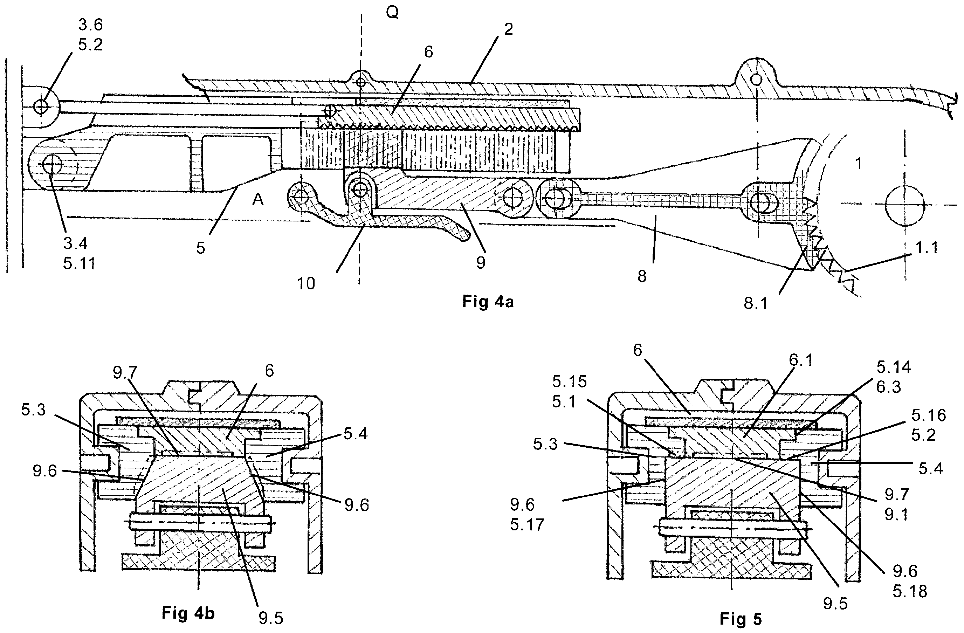

The holder 3 for a driver interface is in the described embodiment a flat plate, however other configurations are possible. The holder 3 comprises a first side 3.1 and a second side 3.2. The first side 3.1 comprises a first and a second attachment 3.3 for pivotally attaching the holder 3 to the first body portion 5 and a third attachment 3.5 for pivotally attaching the holder 3 to the second body portion 6. Pivotal attachment may be realized by shafts (not shown) through openings 3.4, 3.6 in the attachments 3.3, 3.5 and openings 5.11, 6.2 in the first and the second body portions 5, 6 (shown in figure 4a). In the described embodiment, an extension rod 3.7 connects the holder 3 to the second body portion 6. However, the holder 3 may also be pivotally connected directly to the second body 6. The second side 3.2 of the holder 3 is configured to hold a driver interface. By "driver interface" is meant any type of controls or displays used by the driver for controlling the operation of the lift-truck. For example a LED- or LCD display of the computer of the lift truck. The second side 3.2 of the holder 3 may therefore be provided with suitable attachment means (not shown) for holding the driver interface to the holder 3. For example, latches or bolts.

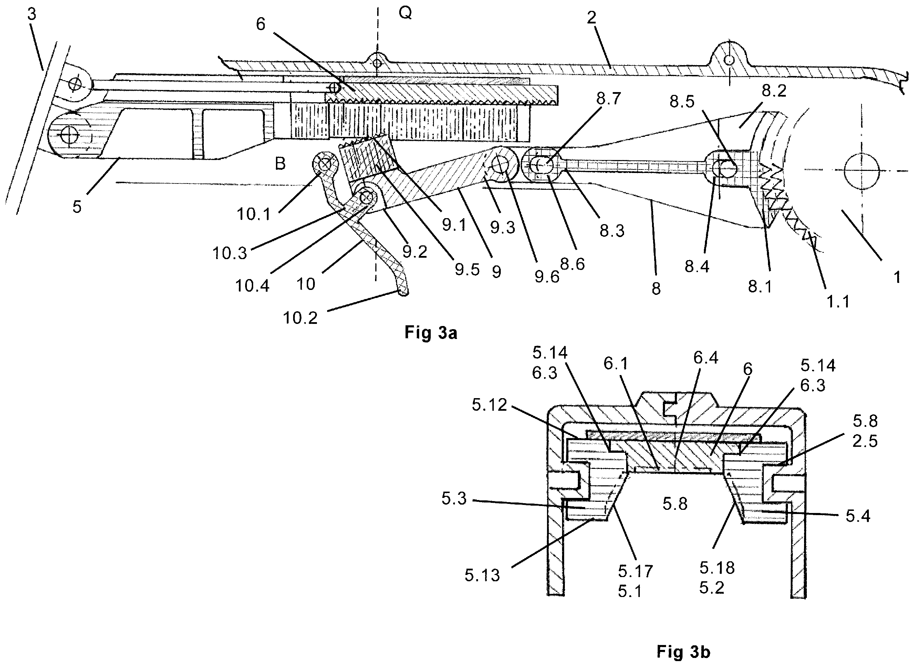

Also shown in figure 2 is a releasable locking linkage 7 for locking the housing 2, the body 4 and the holder 3 in a selected position. The locking linkage 7 comprises a first linkage section 8, a second linkage section 9 and a lever 10 for manually operating the locking linkage 7. The locking linkage 7 will be further described under figure 3a.

Figure 3a shows schematically a partial cross-sectional view along the longitudinal center of the adjustable arm 1 according to the present disclosure. Figure 3b shows a cross-sectional front view taken at position Q in figure 3a (the locking linkage 7 has been omitted in figure 3b).

Turning to figure 3b. The second body portion 6 is arranged in the upper side 5.12 of the first body portion 5 such that a space 5.8 is limited between the first body portion 6 and the first and the second leg 5.3, 5.4 of the second body portion 5. The space 5.8 is open in the lower side 5.13 of the first body portion 5. The elongate teeth sections 5.1, 5.2, of the first and the second legs 5.3 and 5.4 and the elongate teeth section 6.1 of the second body portion faces into the space 5.8

Seen in cross-section, the second body portion 6 comprises a rectangular central section 6.4 having a lower surface which comprises the teeth 6.1. The second body portion 6 further comprises two rectangular guide flanges 6.3 which, extend on opposite sides of the central section 6.4.

The first and the second leg 5.3, 5.4 are configured to receive between them the second body portion 6. Therefore, the upper part of the first and the second leg 5.3, 5.4 comprise, respectively, an upper guide recess 5.14 which is configured receive and support the guide flanges 6.3 of the second body portion 6.

The second body portion 6 is slidable arranged in the first body portion 5 and the corresponding guide flanges 6.3 and guide recesses 5.14 ensures thereby a smooth movement of the second body portion 6 along the first body portion 5.

The first and the second leg 5.3, 5.4 are further configured to receive between them a locking element 9.5 of the second linkage section 9 (see figure 4b). In the shown embodiment the locking element 9.5 has beveled side surfaces 9.6 and therefore the lower part of the respective first and the second leg 5.3, 5.4 comprises correspondingly beveled facing surfaces 5.17, 5.18 which are provided with teeth 5.1, 5.2.

To guide the movement of the first body portion 5 in the housing 2, corresponding guiding means 5.8, 2.5 may be provided in the first body portion 5 and in the housing 2. For example, as shown in figure 3b, the corresponding guiding means may be in the form of a slot 5.8 in the first body portion 5 and a protrusion 2.5 in the housing.

Turning to figure 3a. The locking linkage 7 comprises a first linkage section 8, a second linkage section 9 and a lever 10 for manually operating the locking linkage 7. The first and the second linkage sections 8, 9 are arranged in the housing 2.

The first linkage section 8 is elongate and comprises a first end 8.2 and a second end 8.3. The first end 8.2 comprises a concave curved section of teeth 8.1 which are configured to engage a convex curved section of teeth 1.1 of the base 1. The first linkage section 8 is attached to the housing 2 by first and second shafts 8.5, 8.7 extending through a first and a second oblong opening 8.4, 8.6 in the first linkage section 8. The oblong openings 8.4, 8.6 allow the first linkage section 8 to move axially in the housing 2, such that the concave section of teeth 8.1 of the first linkage section 8 may be brought into, or out of engagement with the convex section of teeth 1.1 of the base 1.

The second linkage section 9 is elongate and has a first end 9.2 and a second end 9.3. The first end 9.2 comprises a protruding locking element 9.5 which is configured to enter into the space 5.8 between the first and the second legs 5.3, 5.4 of the first body portion 5 (see figure 3b). As described above, the cross-sectional geometry and size of the locking element 9.5 corresponds to the cross-sectional geometry and size of the space 5.8. The locking element 9.5, which in cross-section has the shape of a truncated cone, comprises teeth 9.1 for engaging the sections of teeth 5.1, 5.2 of the first and the second legs 5.3, 5.4 of the first body 5 and the section of teeth 6.1 of the second body 6. The locking element 9.5 may therefore comprise a first and a second side surface 9.6 having teeth 9.1 for engaging the section of teeth 5.1, 5.2 of the first and second legs 5.3, 5.4 of the first body portion and a top surface 9.7 having teeth 9.1 for engaging the section of teeth 6.1 of the second body portion 6 (see figure 4b).

The second end 9.3 of the second linkage section 9 is pivotally attached to the second end 8.3 of the first linkage section 8 by a shaft extending through an opening 9.6 in the second end 9.3 of the second linkage section 9.

The lever 10 comprises a first end 10.1 which is pivotally attached to the housing 2, in a position in front of the locking element 9.5. That is, in a position between the second linkage portion 9 and the second end 2.2 of the housing 2. The lever 10 further comprises a second end 10.2. The lever also comprises a stem 10.3 which is arranged between the first end 10.1 and the second end 10.2 of the lever 10. The stem 10.3 has an end 10.4 which is pivotally attached to the second linkage section 9 in a position below the locking element 9.5. Pivotal attachment is achieved by a shaft extending through an opening in the end 10.4 of the stem 10.3.

The locking linkage 7 is arranged to be moved between a locked position A and an unlocked position B by manual operation of the lever 10.

Figure 3a, as described above shows the adjustable arm 1 in the unlocked position B.

The lever 10 has thereby been pulled away from the housing 2, which causes the second linkage section 9 to pivot around the first linkage section 8. The teeth 9.1 of the locking element 9.5 are thereby moved out of engagement with the section of teeth 5.1, 5.2 of the first and the second leg 5.3, 5.4 of the first body portion and the section of teeth 6.1 of the second body portion 6. Simultaneously, the second linkage section 9 exert a pulling force on the first linkage section 8 which is moved axially away from the base such that the concave section of teeth 8.1 of first linkage section 8 is moved out of engagement with the convex section of teeth 1.1 of the base 1. The pulling force is achieved by the stem 10.4 of the lever 10.

When the locking linkage is in the unlocked position B, the housing 2 may be pivoted around the base 1 since the teeth 8.1 of the first linkage section 8 are out of engagement with the teeth of the base 1. The body 4 may be moved axially in the housing 2 since the sections of teeth 5.1, 5.2 of the first and second legs 5.3, 54 are out of engagement with the section of teeth 9.1 of the second linkage section 9. The holder 3 for a driver interface may be pivoted around both the first and the second the body portion 5, 6. This is so since the teeth 6.1 of the second body portion 6 are out of engagement with the teeth 9.1 of the second linkage portion 9.1 which in turn allows the second body portion 6 to move in axial direction along the first body portion 5.

When the adjustable arm has been placed in a selected position, the locking linkage 7 is moved to a locked position A.

Figure 4a shows schematically the adjustable arm 1 described under figure 3a in locked position A.

Thus, the lever 10 has been pushed in direction towards the housing 2, which cause the second linkage section 9 to pivot around the first linkage section 8 towards the first and the second body 5, 6 such that the locking element 9.5 is moved into the space 5.8 (see figure 4b). The teeth 9.1 of the locking element 9.5 are thereby moved into engagement with the section of teeth 5.1, 5.2 of the first and the second leg 5.3, 5.4 of the first body portion 5 and into engagement with the section of teeth 6.1 of the second body portion 6. Simultaneously, the second linkage section 9 exert a pushing force on the first linkage section 8 which is moved axially towards the base 1 such that the concave section of teeth 8.1 of first linkage portion 8 is moved into engagement with the convex section of teeth 1.1 of the base 1. In the locked position A, the housing 2, the arm body 4 is fixed in the housing 2, the holder 3 for a driver interface is fixed to the end 4.1 of the arm body 4 and the housing 2 is fixed to the base 1.

Although a particular embodiment has been disclosed in detail this has been done for purpose of illustration only, and is not intended to be limiting. In particular it is contemplated that various substitutions, alterations and modifications may be made within the scope of the appended claims.

For example, figure 5 shows a cross-sectional front view of a second embodiment of the adjustable arm 1 of the present disclosure. In the second embodiment, the design of the locking element 9.5 of the first linkage section 9 and the first and the second legs 5.3, 5.4 of the first body portion have been changed with respect to the first embodiment. The other features of the second embodiment are identical with the features described under the first embodiment.

According to the second embodiment, the locking element 9.5 of the second linkage section 9 is of rectangular cross-section and comprises a flat top surface 9.7 having teeth 9.1 and parallel side surfaces 9.6 that are free of teeth.

The lower part of the first and the second leg 5.3, 5.4 are therefore configured with parallel, mutually facing side surfaces 5.17, 5.18 and two spaced apart abutment surfaces 5.15, 5.16 respectively extending radially from the first and the second leg 5.3, 5.4 into the space 5.8 for receiving the locking element 9.5. The respective abutment surface 5.15, 5.16 comprises teeth 5.1, 5.2.

The abutment surface 5.15, 5.16 are configured such that when the second body portion 6 is arranged in the upper part of the legs 5.3, 5.4 of the first body portion 5, the of teeth 5.1, 5.2 of the abutment surfaces 5.15, 5.16 are continuous with the section of teeth 6.1 of the second body portion 6 and directed into the space 5.8.

The advantage with this embodiment is that it facilitates the engagement between the teeth on the locking element 9.5 and the teeth 5.1, 5.2 on the first and the second leg 5.3 5.4 and the teeth 6.1 on the second body 6.

Moreover, although specific terms may be employed herein, they are used in a generic and descriptive sense only and not for purposes of limitation. Furthermore, as used herein, the terms "comprise/comprises" or "include/includes" do not exclude the presence of other elements. Finally, reference signs in the claims are provided merely as a clarifying example and should not be construed as limiting the scope of the claims in any way.

## Claims

1. An adjustable arm (100) for holding a driver interface of a lift-truck, comprising a base (1) configured to be attached to a lift-truck; an elongate housing (2) pivotally attached to the base (1) around a first axis (Y1); an arm body (4) axially movable in the housing (2) along a second axis (X1) and; a holder (3) for a driver interface pivotally attached to the arm body (4) around a third axis (Y2), and;
- a locking linkage (7) configured to engage the base (1) and the arm body (4) and comprising a lever (10) for manual operation of the locking linkage (7) between a locked position A in which the locking linkage (7) is in locking engagement with the base (1) and the arm body (4) and an unlocked position B in which the locking linkage (7) is out of engagement with the base (1) and the arm body (4), wherein the adjustable arm (100) is arranged such that when the locking linkage (7) is in:
- the locked position A, the housing (2) is fixed to the base (1), the holder (3) is fixed to the end of the arm body (4) and the arm body (4) is fixed in the housing (2) and in
- the unlocked position B, the housing (2) is pivotal around the first axis (Y1), the arm body (4) is movable in the housing (2) along the second axis (X1) and the holder (3) is pivotal around the third axis (Y2) **characterized in that**;
- the base (1) comprises engagement means (1.1) and;
- the arm body (4) comprises a first body portion (5) having engagement means (5.1, 5.2) and that is arranged axially movable in said housing (2); and a second body portion (6) having engagement means (6.1) and that is arranged axially movable in said first body portion (5); and wherein the holder (3) for a driver interface is pivotally attached to said first and second body portion (5, 6) and;
- the locking linkage (7) comprises a first linkage section (8) having engagement means (8.1) for engaging the engagement means (1.1) of the base (1) and a second linkage section (9) having engagement means (9.1) for engaging the engagement means (5.1, 5.2, 6.1) of said first and second body portion (5, 6).

2. The adjustable arm (100) according to claim 1, wherein the engagement means (1.1, 5.1, 5.2, 8.1, 9.1) are intermeshing teeth.

3. The adjustable arm (100) according to claims 1 or 2, wherein the housing (2) has a first end (2.1) pivotally attached to the base (1) such that the engagement means (1.1) of said base (1) extend into said housing (2).

4. The adjustable arm (100) according to anyone of claims 1 - 3, wherein the locking linkage (7) is arranged such that in the locked position A, the engagement means (8.1) of the first linkage section (8) are in engagement with the engagement means (1.1) of the base (1) and the engagement means (9.1) of the second linkage section (9) are in engagement with the engagement means (5.1, 5.2, 6.1) of the first and the second body portion (5, 6) and in the unlocked position B, the engagement means (8.1) of the first linkage section (8) are out of engagement with the engagement means (1.1) of the base (1) and the engagement means (9.1) of the second linkage section (9) are out of engagement with the engagement means (5.1, 5.2, 6.1) of said first and second body portion (5, 6).

5. The adjustable arm (100) according to anyone of claims 1 -4, wherein the first linkage section (8) is arranged axially movable in said housing (2) and the second linkage section (9) pivotally attached to the first linkage section (8).

6. The adjustable arm (100) according to anyone of claims 1 - 5, wherein the first linkage section (8) has a first end (8.2) and a second end (8.3), wherein the first end (8.2) comprises the engagement means (8.1) for engaging the engagement means (1.1) of the base (1) and wherein the second linkage section (9) has a first end (9.2) and a second end (9.3), wherein the first end (9.2) comprises the engagement means (9.1) for engaging the engagement means (5.1, 5.2, 6.1) of the first and the second body portion (5,6) and wherein the second end (9.3) is pivotally attached to the second end (8.3) of the first linkage section (8).

7. The adjustable arm (100) according to anyone of claims 1 - 6, wherein the lever (10) comprises a first end (10.1) and a second end (10.2) and a stem (10.3) arranged between the first and the second end (10.1, 10.2), wherein the first end (10.1) is pivotally attached to the housing (2) and the stem (10.3) is pivotally attached to the first end (9.2) of the second linkage section (9).

8. The adjustable arm (100) according to anyone of claims 1 - 7, wherein the first body portion (5) is elongate and comprises a first and a second leg (5.3, 5.4) arranged parallel and spaced apart, wherein the first leg (5.3) comprises a first elongate section of teeth (5.1) and the second leg (5.4) comprises a second elongate section of teeth (5.2).

9. The adjustable arm (100) according to claim 8, wherein the second body portion (6) comprises an elongate section of teeth (6.1) and wherein the second body portion (6) is arranged on the first body portion (5) such that a space (5.8) is formed between the second body portion (6) and the first and the second leg (5.3, 5.4), wherein the teeth (5.1, 5.2, 6.1) of the first and the second leg (5.3, 5.4) and the second body portion (6) face into the space (5.8).

10. The adjustable arm (100) according to claim 9, wherein the second linkage section (9) comprises a locking element (9.5) configured to extend into the space (5.8) when the locking linkage (7) is in the locked position A, wherein the locking element (5.8) comprises the teeth (9.1) for engaging the teeth (5.1, 5.2, 6.1) on the first and second legs (5.3, 5.4) and the second body portion (6).

11. The adjustable arm (100) according to anyone of claims 1 - 10, wherein the holder (3) for a driver interface comprises a first and a second side (3.1, 3.2) wherein the first side (3.1) comprises a first attachment (3.3) for pivotally attaching the holder (3) to the first body portion (5) and a second attachment (3.5) for pivotally attaching the holder (3) to the second body portion (6).

12. A lift-truck comprising an adjustable arm (100) according to anyone of claims 1 - 11 for holding a driver interface.

## Patentansprüche

1. Ein anpassbarer Arm (100) zum Halten einer Fahrerschnittstelle eines Hubwagens, der Folgendes aufweist:
eine Basis (1), die eingerichtet ist, an einen Hubwagen angebracht zu sein;
ein längliches Gehäuse (2), das drehbar um eine erste Achse (Y1) an der Basis (1) angebracht ist;
einen Armkörper (4), der im Gehäuse (2) axial verschiebbar entlang einer zweiten Achse (X1) ist; und
einen Halter (3) für eine Fahrerschnittstelle, der drehbar um eine dritte Achse (Y2) am Armkörper (4) angebracht ist;
eine Verriegelungsverbindung (7), die eingerichtet ist, die Basis (1) und den Armkörper (4) aneinander zu koppeln und die einen Hebel (10) aufweist zur manuellen Bedienung der Verriegelungsverbindung (7) zwischen einer verriegelten Position A, in der die Verriegelungsverbindung (7) verriegelnd an die Basis (1) und den Armkörper (4) gekoppelt ist, und einer entriegelten Position B, in der die Verriegelungsverbindung (7) nicht mit der Basis (1) und dem Armkörper (4) gekoppelt ist, wobei der anpassbare Arm (100) derart angeordnet ist, dass,
wenn die Verriegelungsverbindung (7) in der verriegelten Position A ist, das Gehäuse (2) an der Basis (1) befestigt ist, der Halter (3) am Ende des Armkörpers (4) befestigt ist und der Armkörper (4) im Gehäuse (2) befestigt ist; und dass
wenn die Verriegelungsverbindung (7) in der entriegelten Position B ist, das Gehäuse (2) drehbar um die erste Achse (Y1) ist, der Armkörper (4) verschiebbar im Gehäuse (2) entlang der zweiten Achse (X1) ist und der Halter (3) drehbar um die dritte Achse (Y2) ist;
**dadurch gekennzeichnet, dass**
die Basis (1) Koppelungsmittel (1.1) aufweist; und
der Armkörper (4) Folgendes aufweist:
einen ersten Körperabschnitt (5) mit Koppelungsmitteln (5.1, 5.2) und der axial verschiebbar im Gehäuse (2) angeordnet ist; und
einen zweiten Körperabschnitt (6) mit Koppelungsmitteln (6.1) und der axial verschiebbar in dem ersten Körperabschnitt (5) angeordnet ist; und
wobei der Halter (3) für eine Fahrerschnittstelle drehbar an dem ersten und dem zweiten Körperabschnitt (5, 6) angebracht ist; und
die Verriegelungsverbindung (7) Folgendes aufweist:
einen ersten Verriegelungsbereich (8) mit Koppelungsmitteln (8.1) zum Koppeln an die Koppelungsmittel (1.1) der Basis (1) und einen zweiten Verriegelungsbereich (9) mit Koppelungsmitteln (9.1) zum Koppeln an die Koppelungsmittel (5.1, 5.2, 6.1) des ersten und zweiten Körperabschnittes (5, 6).

2. Der anpassbare Arm (100) nach Anspruch 1, wobei die Koppelungsmittel (1.1, 5.1, 5.2, 8.1, 9.1) ineinander greifende Zähne aufweist.

3. Der anpassbare Arm (100) nach den Ansprüchen 1 oder 2, wobei das Gehäuse (2) ein erstes Ende (2.1) hat, das drehbar an der Basis (1) angebracht ist, so dass die Koppelungsmittel (1.1) der Basis (1) in das Gehäuse (2) hineinragen.

4. Der anpassbare Arm (100) nach einem der Ansprüche 1 bis 3, wobei die Verriegelungsverbindung (7) derart angeordnet ist, dass in der verriegelten Position A die Koppelungsmittel (8.1) des ersten Verriegelungsbereiches (8) an die Koppelungsmittel (1.1) der Basis (1) gekoppelt sind und die Koppelungsmittel (9.1) des zweiten Verriegelungsbereiches (9) an die Koppelungsmittel (5.1, 5.2, 6.1) des ersten und des zweiten Körperabschnittes (5, 6) gekoppelt sind und dass in der entriegelten Position B die Koppelungsmittel (8.1) des ersten Verriegelungsbereiches (8) nicht an die Koppelungsmittel (1.1) der Basis (1) gekoppelt sind und die Koppelungsmittel (9.1) des zweiten Verriegelungsbereiches (9) nicht mit den Koppelungsmitteln (5.1, 5.2, 6.1) des ersten und des zweiten Körperabschnittes (5, 6) gekoppelt sind.

5. Der anpassbare Arm (100) nach einem der Ansprüche 1 bis 4, wobei der erste Verriegelungsabschnitt (8) axial verschiebbar in dem Gehäuse (2) angebracht ist und wobei der zweite Verriegelungsbereich (9) drehbar am ersten Verriegelungsbereich (8) angebracht ist.

6. Der anpassbare Arm (100) nach einem der Ansprüche 1 bis 5, wobei der erste Verriegelungsbereich (8) ein erste Ende (8.2) und ein zweite Ende (8.3) aufweist, wobei das erste Ende (8.2) die Koppelungsmittel (8.1) aufweist zum Koppeln an die Koppelungsmittel (1.1) der Basis (1) und wobei der zweite Verriegelungsbereich (9) ein erstes Ende (9.2) und ein zweites Ende (9.3) aufweist, wobei das erste Ende (9.2) die Koppelungsmittel (9.1) aufweist zum Koppeln an die Koppelungsmittel (5.1, 5.2, 6.1) des ersten und des zweiten Körperabschnittes (5, 6) und wobei das zweite Ende (9.3) drehbar am zweiten Ende (8.3) des ersten Verriegelungsbereiches (8) angebracht ist.

7. Der anpassbare Arm (100) nach einem der Ansprüche 1 bis 6, wobei der Hebel (10) Folgendes aufweist:
ein erstes Ende (10.1) und ein zweites Ende (10.2) und einen Hebelarm (10.3), der zwischen dem ersten und dem zweiten Ende (10.1, 10.2) angebracht ist, wobei das erste Ende (10.1) drehbar am Gehäuse (2) angebracht ist und wobei der Hebelarm (10.3) drehbar am ersten Ende (9.2) des zweiten Verriegelungsbereiches (9) angebracht ist.

8. Der anpassbare Arm (100) nach einem der Ansprüche 1 bis 7, wobei der erste Körperabschnitt (5) länglich ist und einen ersten und einen zweiten Schenkel (5.3, 5.4) aufweist, die parallel und beabstandet voneinander angeordnet sind, wobei der erste Schenkel (5.3) einen ersten länglichen Bereich mit Zähnen (5.1) aufweist und wobei der zweite Schenkel (5.4) einen zweiten länglichen Bereich mit Zähnen (5.2) aufweist.

9. Der anpassbare Arm (100) nach Anspruch 8, wobei der zweite Körperabschnitt (6) einen länglichen Abschnitt mit Zähnen (6.1) aufweist und wobei der zweite Körperabschnitt (6) derart auf dem ersten Körperabschnitt (5) angeordnet ist, dass ein Raum (5.8) zwischen dem zweiten Körperabschnitt (6) und dem ersten und dem zweiten Schenkel (5.3, 5.4) geformt wird, wobei die Zähne (5.1, 5.2, 6.1) des ersten und des zweiten Schenkels (5.3, 5.4) und der zweite Körperabschnitt (6) in den Raum (5.8) hineinzeigen.

10. Der anpassbare Arm (100) nach Anspruch 9, wobei der zweite Verriegelungsbereich (9) ein Verriegelungselement (9.5) aufweist, das eingerichtet ist, sich in den Raum (5.8) hinein zu erstrecken, wenn sich die Verriegelungsverbindung (7) in der verriegelten Position A befindet, wobei das Verriegelungselement (5.8) die Zähne (9.1) aufweist zum Koppeln der Zähne (5.1, 5.2, 6.1) auf den ersten und zweiten Schenkeln (5.3, 5.4) und auf dem zweiten Körperabschnitt (6).

11. Der anpassbare Arm (100) nach einem der Ansprüche 1 bis 10, wobei der Halter (3) für eine Fahrerschnittstelle Folgendes aufweist:
eine erste und eine zweite Seite (3.1, 3.2), wobei die erste Seite (3.1) eine erste Anbringung (3.3) zum drehbaren Anbringen des Halters (3) an den ersten Körperabschnitt (5) und eine zweite Anbringung (3.5) zum drehbaren Anbringen des Halters (3) an den zweiten Körperabschnitt (6) aufweist.

12. Ein Hubwagen, der einen anpassbaren Arm (100) gemäß einem der Ansprüche 1 bis 11 zum Halten einer Fahrerschnittstelle aufweist.

## Revendications

1. Bras réglable (100) pour supporter une interface conducteur d'un chariot élévateur, comprenant une base (1) configurée pour être fixée à un chariot élévateur ; un logement allongé (2) fixé en pivotement à la base (1) autour d'un premier axe (Y1) ; un corps de bras (4) mobile axialement dans le logement (2) selon un deuxième axe (X1) ; et un support (3) pour une interface pilote fixée en pivotement au corps de bras (4) autour d'un troisième axe (Y2), et ;
- une tringlerie de verrouillage (7) configurée pour enclencher la base (1) et le corps de bras (4) et comprenant un levier (10) pour un actionnement manuel de la tringlerie de verrouillage (7) entre une position verrouillée A dans laquelle la tringlerie de verrouillage (7) est en enclenchement de verrouillage avec la base (1) et le corps de bras (4) et une position déverrouillée B dans laquelle la tringlerie de verrouillage (7) est hors d'enclenchement avec la base (1) et le corps de bras (4), dans lequel le bras réglable (100) est agencé de sorte que lorsque la tringlerie de verrouillage (7) est dans:
- la position verrouillée A, le logement (2) soit fixé à la base (1), le support (3) soit fixé à l'extrémité du corps de bras (4) et le corps de bras (4) soit fixé dans le logement (2) et dans
- la position déverrouillée B, le logement (2) soit pivotant autour du premier axe (Y1), le corps de bras (4) soit mobile dans le logement (2) selon le deuxième axe (X1) et le support (3) soit pivotant autour du troisième axe (Y2) ; **caractérisé en ce que** ;
- la base (1) comprend des moyens d'enclenchement (1.1) ; et ;
- le corps de bras (4) comprend une première portion de corps (5) ayant des moyens d'enclenchement (5.1, 5.2) et qui est agencée mobile axialement dans ledit logement (2) ; et une seconde portion de corps (6) ayant des moyens d'enclenchement (6.1) et qui est agencée mobile axialement dans ladite première portion de corps (5) ; et dans lequel le support (3) pour une interface conducteur est fixé en pivotement auxdites première et seconde portions de corps (5, 6) et ;
- la tringlerie de verrouillage (7) comprend une première section de tringlerie (8) ayant des moyens d'enclenchement (8.1) pour enclencher les moyens d'enclenchement (1.1) de la base (1) et une seconde section de tringlerie (9) ayant des moyens d'enclenchement (9.1) pour enclencher les moyens d'enclenchement (5.1, 5.2, 6.1) desdites première et seconde portions de corps (5, 6).

2. Bras réglable (100) selon la revendication 1, dans lequel les moyens d'enclenchement (1.1, 5.1, 5.2, 8.1, 9.1) sont des dents d'engrènement.

3. Bras réglable (100) selon les revendications 1 ou 2, dans lequel le logement (2) a une première extrémité (2.1) fixée en pivotement à la base (1) de sorte que les moyens d'enclenchement (1.1) de ladite base (1) s'étendent dans ledit logement (2).

4. Bras réglable (100) selon l'une quelconque des revendications 1 à 3, dans lequel la tringlerie de verrouillage (7) est agencée de sorte que, dans la position verrouillée A, les moyens d'enclenchement (8.1) de la première section de tringlerie (8) soient en enclenchement avec les moyens d'enclenchement (1.1) de la base (1) et les moyens d'enclenchement (9.1) de la seconde section de tringlerie (9) soient en enclenchement avec les moyens d'enclenchement (5.1, 5.2, 6.1) des première et seconde portions de corps (5, 6) et dans la position déverrouillée B, les moyens d'enclenchement (8.1) de la première section de tringlerie (8) soient hors d'enclenchement avec les moyens d'enclenchement (1.1) de la base (1) et les moyens d'enclenchement (9.1) de la seconde section de tringlerie (9) soient hors d'enclenchement avec les moyens d'enclenchement (5.1, 5.2, 6.1) desdites première et seconde portions de corps (5, 6).

5. Bras réglable (100) selon l'une quelconque des revendications 1 à 4, dans lequel la première section de tringlerie (8) est agencée mobile axialement dans ledit logement (2) et la seconde section de tringlerie (9) fixée en pivotement à la première section de tringlerie (8).

6. Bras réglable (100) selon l'une quelconque des revendications 1 à 5, dans lequel la première section de tringlerie (8) a une première extrémité (8.2) et une seconde extrémité (8.3), dans lequel la première extrémité (8.2) comprend les moyens d'enclenchement (8.1) pour enclencher les moyens d'enclenchement (1.1) de la base (1) et dans lequel la seconde section de tringlerie (9) a une première extrémité (9.2) et une seconde extrémité (9.3), dans lequel la première extrémité (9.2) comprend les moyens d'enclenchement (9.1) pour enclencher les moyens d'enclenchement (5.1, 5.2, 6.1) des première et seconde portions de corps (5, 6) et dans lequel la seconde extrémité (9.3) est fixée en pivotement à la seconde extrémité (8.3) de la première section de tringlerie (8).

7. Bras réglable (100) selon l'une quelconque des revendications 1 à 6, dans lequel le levier (10) comprend une première extrémité (10.1) et une seconde extrémité (10.2) et une tige (10.3) agencée entre la première et la seconde extrémité (10.1, 10.2), dans lequel la première extrémité (10.1) est fixée en pivotement au logement (2) et la tige (10.3) est fixée en pivotement à la première extrémité (9.2) de la seconde section de tringlerie (9).

8. Bras réglable (100) selon l'une quelconque des revendications 1 à 7, dans lequel la première portion de corps (5) est allongée et comprend une première et une seconde jambe (5.3, 5.4) agencées parallèles et espacées, dans lequel la première jambe (5.3) comprend une première section allongée de dents (5.1) et la seconde jambe (5.4) comprend une seconde section allongée de dents (5.2).

9. Bras réglable (100) selon la revendication 8, dans lequel la seconde portion de corps (6) comprend une section allongée de dents (6.1) et dans lequel la seconde portion de corps (6) est agencée sur la première portion de corps (5) de sorte qu'un espace (5.8) soit formé entre la seconde portion de corps (6) et la première et la seconde jambe (5.3, 5.4), dans lequel les dents (5.1, 5.2, 6.1) de la première et de la seconde jambe (5.3, 5.4) et la seconde portion de corps (6) se font face dans l'espace (5.8).

10. Bras réglable (100) selon la revendication 9, dans lequel la seconde section de tringlerie (9) comprend un élément de verrouillage (9.5) configuré pour s'étendre dans l'espace (5.8) lorsque la tringlerie de verrouillage (7) est dans la position verrouillée A, dans lequel l'élément de verrouillage (5.8) comprend les dents (9.1) pour enclencher les dents (5.1, 5.2, 6.1) sur les première et seconde jambes (5.3, 5.4) et la seconde portion de corps (6).

11. Bras réglable (100) selon l'une quelconque des revendications 1 à 10, dans lequel le support (3) pour une interface conducteur comprend un premier et un second côté (3.1, 3.2) dans lequel le premier côté (3.1) comprend une première fixation (3.3) pour fixer en pivotement le support (3) à la première portion de corps (5) et une seconde fixation (3.5) pour fixer en pivotement le support (3) à la seconde portion de corps (6).

12. Chariot élévateur comprenant un bras réglable (100) selon l'une quelconque des revendications 1 à 11, pour supporter une interface conducteur.
